# EUROPEAN PATENT SPECIFICATION

(11) **EP 1 498 316 B1**
(45) Date of publication and mention of the grant of the patent: **10.01.2007**
(21) Application number: 03015661.6
(22) Date of filing: 17.07.2003
(51) Int. Cl.: B60R 11/02

(54) **Display module**
Anzeigemodul
Module de visualisation

(43) Date of publication of application: 19.01.2005
(73) Proprietor: Harman Becker Automotive Systems GmbH, 76307 Karlsbad (DE)
(72) Inventor: Slatosch, Gregor, 75334 Kornweiler (DE); Alexy, Wolfgang, 75181 Pforzheim Hohenwart (DE)
(74) Representative: Bertsch, Florian Oliver

(56) References cited:
- DE-U- 29 706 838
- GB-A- 2 273 955
- US-A- 5 016 851
- US-A- 6 113 047

## Description

The invention relates to a display module, which comprises a pivotably mounted display unit. The invention relates to a display module which is mounted in a vehicle.

Recently many vehicles have been equipped with a computer-based system for outputting information to the driver of the vehicle, this system comprising telematic systems, navigation systems, or simply vehicle radio audiosystems. These systems can provide the driver with many different pieces of information concerning traffic situations, travel information, route guidance, and/ or information about a present operating state of the vehicle. All this information has to be provided to the driver of the vehicle or any other passenger in the vehicle. Therefore, recently the vehicles have been equipped with display modules comprising display panels on which a predetermined information can be shown.

US patent publication US 2001/0042812 A1 discloses an in-dash bracket assembly for pivotably and slidably mounting a display unit to a vehicle dash including a base and pivot assembly, a support bracket and a display mounting hardware. In this arrangement, however, the display unit is not mounted in the dashboard, but only fixed thereto, leaving a poor impression of the design of the interior of the vehicle.

GB 2 273 955 A discloses a hinge assembly having an arcuate protrusion engaging in a matching arcuate channel for pivotably mounting a door to outdoor poster display units.

DE 297 96 838 U1 discloses a holding device for a navigation system, the navigation system being connected to the dashboard using an elongated arm.

### Summary of the invention

Therefore, there still remains a need for providing an improved display module provided in the dashboard of a vehicle, which can pivot around a pivot axis and which remains stable at every pivot angle.

These objects are accomplished by a display module according to claim 1.

The dependent claims are directed to preferred embodiments of the invention.

The display module according to the invention comprises a frame, and a bearing for pivotably mounting the display to the frame, the bearing comprising a first component provided with the display unit and a second component provided with the frame. One of the first and second components may comprise at least one protrusion shaped as, or arranged along, a ring segment, and the other of the first and second components forms a channel shaped as a ring segment in which the protrusion runs. Due to this arrangement of the protrusion shaped as a ring segment, which runs in a channel formed by the other component, the pivoting axis of the display unit can be chosen in accordance with the demands that have to be met due to the geometry of the frame in which the display unit is mounted. These arrangements of the ring segment and of the channel allow a pivoting movement, by which the center of the pivoting axis is positioned very close to the display panel of the display unit. If the pivoting axis lies next to the display panel of the display unit, the free space in the surrounding of the display unit, which is needed for the free pivoting movement of the display unit, is minimized. This allows a more pleasant design of the dashboard of the vehicle, as the free space around the display unit, which is necessary for the pivoting movement of the display unit, is minimized.

According to a preferred embodiment of the present invention, the pivoting axis of the display unit lies not more than 20 mm, preferably not more than 10 mm, behind or in front of the display panel of the display unit. The pivoting axis of the display unit may further lie in the plane of the display panel of the display unit. If this is the case, no additional space is needed on the upper and the lower side of the display unit. The pivoting axis can even be situated in front of the display panel, if this is necessary or preferred for the mounting of the display module in the frame which is normally part of the dashboard of the vehicle.

According to the present invention, the other of the first and the second component may comprise a first concave-shaped element and a second convex-shaped element, the channel being formed between the first concave-shaped element and the second convex-shaped element. These two elements of the bearing form the channel in which the ring-shaped protrusion runs. The radii of curvature of the concave-shaped element and the convex-shaped element define the position of the pivoting axis of the display unit, as will be described in more detail below.

Furthermore, the one of the first and the second components comprising the at least one protrusion shaped as, or arranged along, a ring segment may be provided with the display unit, and the other of the first and the second component forming the channel shaped as a ring segment may be provided with the frame. In this embodiment, the protrusion shaped as a ring segment forms a mounting bracket attached to the display unit. This mounting bracket runs in the channel which is provided with the frame. The protrusion is guided in the channel forming a groove, while the display unit is pivoting.

The protrusion may furthermore be sandwiched between the first concave-shaped element and the second convex-shaped element. As the first concave-shaped element and the second convex-shaped element form the channel in which the protrusion runs, the bearing of the display module comprises three parts in the present embodiment: the first concave-shaped element, the second convex-shaped element and the protrusion shaped as a ring segment. It should be understood that the protrusion shaped as a ring segment is not necessarily a one-piece element. It may also be comprised of several pins which are arranged along a ring segment and which run in the channel formed between the convex-shaped and the concave-shaped elements.

According to the invention, the first concave-shaped element is arranged in the frame in a radially movable way with respect to the pivot axis. Furthermore, the first concave-shaped element is pushed towards the second convex-shaped element by means of a resilient device, the second convex element being secured to the frame. With this arrangement the display unit is fixedly arranged at every pivot angle. This means that the display unit can be arranged at every position of the display unit relative to the frame. The resilient device pushes the concave shaped element and therefore the protrusion which is sandwiched between the two elements in the direction of the second convex-shaped element. The second convex element itself is, however, fixed to the frame and forms a stop for the movement of the concave-shaped element in the direction of the convex-shaped element. The resilient devices generates a force from the posterior side of the display module to the anterior side of the display module. In vehicle applications the equipment comprised in the vehicle is exposed to vibrations. Therefore, there is a need for a display module provided in a vehicle so that the pivotable display unit does not change its pivoting angle due to vibrations. With the present arrangement, this situation can be prevented from occurring. The convave-shaped surface which contacts the outer surface of the protrusion, and the inner surface of the protrusion contacting the outer surface of the convex-shaped element are large, so that the resulting frictional forces are high enough to hold the display unit in the predetermined pivot angle chosen by the user of the display module. It should be understood that the resilient device and its characteristics should be chosen such that the force supplied to the first concave-shaped element is high enough for the protrusion remaining in the channel at every possible position. The force needed to stabilize the display unit at any pivot angle will strongly depend on the weight of the pivatable display unit. The heavier the display unit is the stronger the force in the anterior direction has to be.

Furthermore, materials which are used in a vehicle are exposed to high temperature changes, as temperatures in a vehicle may vary between -40 and +60 or 70 °C, when the vehicle is directly exposed to the sun. Due to this temperature changes the materials of the different components of the display module, especially the materials of the bearing, have to be chosen such that, over the whole temperature range, the resulting forces on the protrusion are high enough so that the latter will not change its position in an environment exposed to vibrations.

According to a preferred embodiment the protrusion shaped as, or arranged along, a ring segment is arranged on each lateral side of the display unit together with the other components of the bearing. With this arrangement the frictional forces provided by the two bearing surfaces can be increased and the display unit is attached to the frame at two different locations.

Furthermore, the convex-shaped element may comprise two stops, each of which defining an end position of the pivoting movement of the display unit. The extreme angles of the pivoting movement are defined by the two abutments defined at each end of the convex-shaped surface.

The resilient device may comprise at least one spring disk. A spring disk is a cheap element and the number of the used spring disks can be chosen such that the resultant force pushing the concave-shaped element into the direction of the convex-shaped element can easily be controlled so that the display unit stays in the desired position, i.e. pivoting angle.

Furthermore, the concave-shaped element may comprise, on the side opposite to the convave-shaped surface, an extension which is guided in an aperture of the frame. This extension which may have the form of an elongated bar guides the radial movement of the concave-shaped element relatively to the frame.

Furthermore, the resilient device may be arranged along this extension of the concave-shaped element and the number of the used resilient devices as spring disks is chosen in accordance with the existing demands. This means that more resilient devices are used, when a higher pushing force is needed, and that less resilient devices are used, when a lower resulting force in the direction of the convex-shaped element is needed.

According to a preferred embodiment of the present invention, the centers of radii of curvature of the ring segment, of the first concave-shaped element, and of the second convex-shaped element coincide and define the pivoting axis of the display unit. The geometry of these different bearing elements can be chosen in accordance with the geometry of the dashboard in which the display module is used. In conclusion, the position of the pivoting axis of the display unit can be chosen in a very easy and efficient manner. The pivoting axis can also lie in front of the surface of the display panel of the display unit, when the geometry of the dashboard makes this necessary.

Further features and advantages of the display module according to the invention become apparent from the following description of preferred embodiments with reference to the drawings, in which
Fig. 1 shows a perspective exploded view of a display module with a pivoting display unit,
Fig. 2 shows the display module of Fig. 1 in its assembled state,
Fig. 3 is an exploded side elevation view of the display module,
Fig. 4 is a side elevation view of the display module of Fig. 3 in assembled state, and
Figures 5a and 5b are different bearings which can be used in the display module.

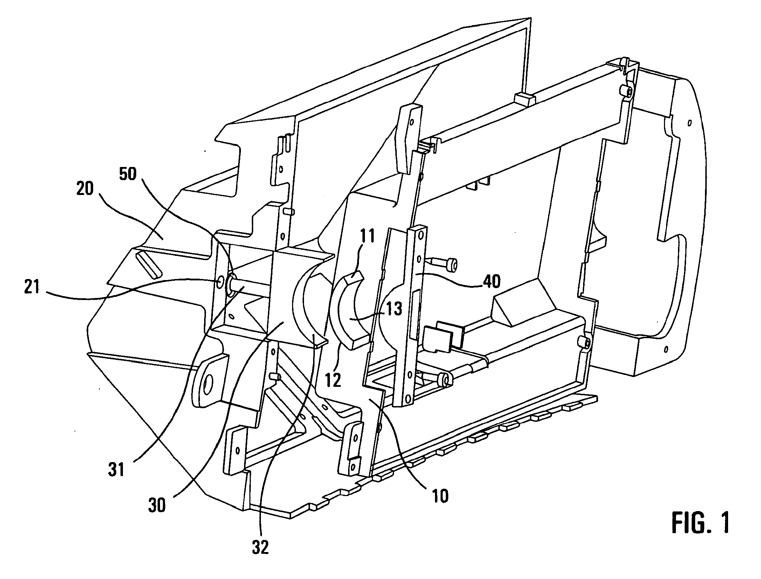

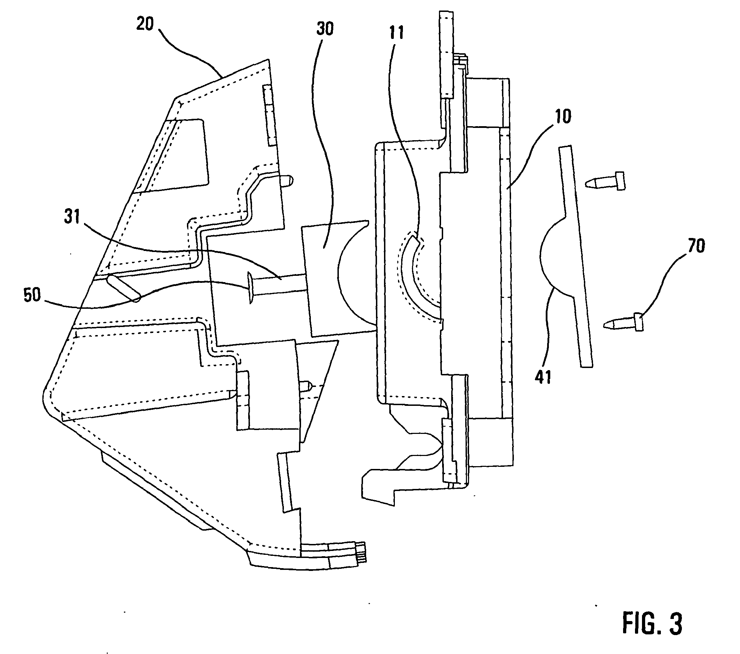

As can be shown in Figures 1 to 4, the display module comprises a display unit 10 to which a display panel (not shown) can be mounted on the anterior side of the display module. The display unit is comprised in a frame 20 which may be a part of a dashboard of a vehicle. It should be understood that it could also be any other part of a housing where a display module with a pivotable display unit can be used.

For the pivotable movement of the display unit 10 a bearing is provided which comprises at least three different pieces, a first concave-shaped element 30, a second convex-shaped element 40, and a protrusion 11 shaped as a ring segment, the latter being provided on each lateral side of the display unit 10. The first concave-shaped element, the second convex-shaped element form the second component of the bearing, and the protrusion shaped as a ring segment forms the first component of the bearing.

As can be seen in Fig. 1, the first concave-shaped element 30 comprises, at the posterior side of the display module, an extension 31 formed as an elongated bar which is slidably mounted in an aperture 21 of the frame 20. Along the extension 31 of the first concave-shaped element a resilient device 50 is provided in the form of a spring disk. In the embodiments shown in Figures 1, 3 and 4, only one spring disk is shown. However, it should be understood that the number of spring disks is chosen in accordance with the force by which the first concave-shaped element should be pushed in the anterior direction. When the extension 31 is introduced into the aperture 21 of the frame 20, the resilient device 50 pushes the first concave-shaped element with its concave-shaped surface 32 in the direction of the second convex-shaped element 40.

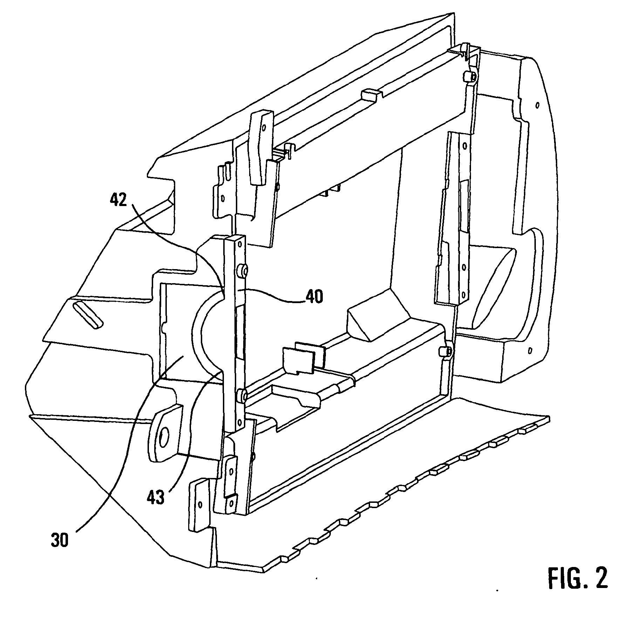

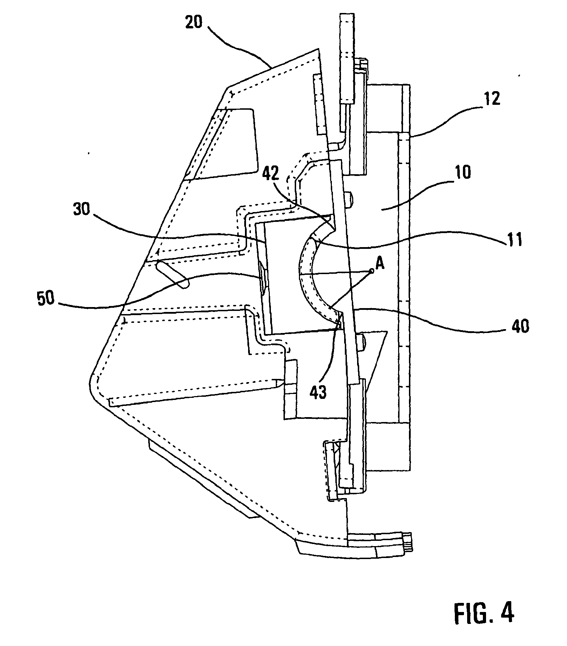

As can be seen in Figures 2 and 4, a channel shaped as a ring segment is formed between the first concave-shaped element 30 and the second convex-shaped element 40. The protrusion 11 shaped as a ring segment is sandwiched between these two elements 30 and 40 and runs in the channel built by these two elements.

Due to the force applied to the first concave-shaped element 30 the concave-shaped surface 32 lies on the convex-shaped surface 12 of the protrusion 11. The convex-shaped element 40 with its convex-shaped surface 41 contacts the inner surface 13 of the protrusion 11. The second convex-shaped element 40 is fixed to the frame 20 by means of fixing means 70. As the position of the second convex-shaped element 40 is fixed relative to the frame, the force applied by the first concave-shaped element 30 to the protrusion 11 and to the second convex-shaped element 40 is chosen by the resilient device, its number and its characteristic.

In Fig. 2 the display module is shown in an assembled state. The resilient device 50 (not shown) pushes the first concave-shaped element 30 in the direction of the second convex-shaped element 40, the protrusion 11 being sandwiched between these two elements. The second convex-shaped element 40 comprises, on the side facing the first concave-shaped element 30, two stops 42 and 43 which limit the movement of the protrusion shaped as a ring segment and which, therefore, limit the pivot angle of the display unit 10. As can be seen from Figures 2 and 4 the angular width of the ring segment and the position of the stops 42 and 43 define the extent to which the display unit may be pivoted. The frictional forces between the concave-shaped surface 32 and the surfaces 12, 13 and 41 depend on the area of these surfaces, on the resilient characteristics of the resilient device 50 and on the materials chosen for the above-mentioned surfaces. These parameters can be chosen in accordance with the weight of the display unit 10 and in accordance with the environment in which the display module is used. As can be seen in Fig. 4, the centers of radii of curvature of the concave-shaped element 30, of the second convex-shaped element 40 and of the ring segment coincide and define the pivoting axis A. In the embodiment shown in Fig. 4 the pivoting axis is situated behind or on the posterior side of the plane of the display panel 12 of the display unit.

With the arrangement of the pivoting axis A the space above and below the display unit 10 for the pivoting movement of the display unit 10 can be chosen. As it is clear from the Figures, the free space needed above and below the display unit 10 is minimized when the pivoting axis A lies within the plane of the display panel 12 of the display unit 10. By choosing the radius of curvature of the different components of the bearing the position of the pivoting axis A can be chosen such that it either lies in front of the display panel of the display unit, directly in the plane or behind the display panel of the display unit.

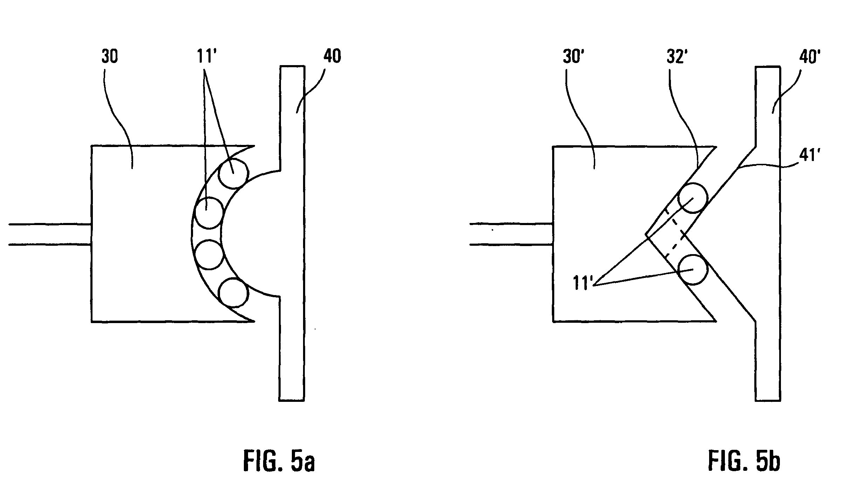

In Figures 5A and 5B another embodiment of the bearing used in the display module according to the present invention is shown. In Fig. 5A first the concave-shaped element 30 and the second convex-shaped element 40 correspond to the ones shown in Figures 1 to 4, so that they are not explained in detail any more. However, the component comprising the protrusion shown in Fig. 5A comprises different pins 11' which are integrally formed with the display unit 10 along a ring segment and which run in the channel formed between the two elements 30 and 40. In this embodiment the fictional forces are less important, as the surfaces contracting each other are smaller. The resultant fictional forces may however be enough for certain applications.

In Fig. 5B another embodiment of the bearing is shown. In this embodiment the first concave-shaped element 30' comprises a triangular-shaped concave surface 32', the convex-shaped surface of the second element 40' also having a triangular-shaped surface 41'. The channel between the two components 30' and 40' could also be divided into two separate channels as indicated by the dashed lines. In this case only two pins 11' run in this channel or these channels.

In conclusion, according to the present invention, a display module is provided comprising a pivotable display unit which can be used within an environment which is strongly exposed to vibrations, but does not change its pivotions angle. This means that the display unit stays at every desired pivoting angle. Furthermore, the diplay module according to the present invention can be used in many different geometric environments, as the pivoting axis of the display unit can be changed very easily by changing the radius of curvature of its bearing components. The pivot axis can, therefore, also be positioned in front of the display panel of the display unit, if desired.

The display module can be incorporated in many different forms of frames or dashboards as the space needed to change the inclimation of the display unit is minimerized due to position of the pivot axis near the display panel itself.

## Claims

1. Display module comprising
- a frame (20),
- a display unit (10) attached to said frame, and
- a bearing for pivotably mounting the display unit (10) to said frame (20), the bearing comprising a first component (11) provided with the display unit and a second component (30, 40) provided with the frame (20),
wherein
one of the first and second components (11) comprises at least one protrusion shaped as, or arranged along, a ring-segment, and the other of the first and second components (30, 40) form a channel shaped as a ring-segment in which the protrusion runs,
**characterized in that** the first concave shaped element (30) is arranged in the frame in a radially movable way with respect to the pivot axis (A) and the first concave shaped element (30) is pushed towards the second convex shaped element (40) by means of a resilient device (50), the second convex element (40) being secured to the frame.

2. Display module according to claim 1,
**characterized in that** the pivoting axis (A) of the display unit lies not more than 20 mm, preferably not more than 10 mm, behind or in front of the display panel (12) of the display unit (10).

3. Display module according to claim 1 or 2, **characterized in that** the other of the first and the second component comprises a first concave shaped element (30) and a second convex shaped element (40), the channel being formed between the first concave shaped element (30) and the second convex shaped element (40).

4. Display module according to one of the preceding claims, **characterized in that** the one of the first and the second components comprising the at least one protrusion (11) shaped as, or arranged along, a ring segment is provided with the display unit (10), and the other of the first and the second component (30, 40) forming the channel shaped as a ring segment is provided with the frame (20).

5. Display module according to claim 3 or 4, **characterized in that** the protrusion (11) is sandwiched between the first concave shaped element (30) and the second convex shaped element (40).

6. Display module according to any of claims 4 or 5, **characterized in that** the protrusion (11) shaped as, or arranged along, a ring segment is arranged on each lateral side of the display unit (10).

7. Display module according to any of claims 3 to 6, **characterized in that** the convex shaped element (40) comprises two stops (42, 43), each of them defining an end position of the pivot movement of the display unit (10).

8. Display module according to any of the preceding claims, **characterized in that** the resilient device (50) comprises at least one spring disk.

9. Display module according to any of claims 3 to 8, **characterized in that** the center of radii of curvature of the protrusion (11), of the first concave shaped element (30) and of the second convex shaped element (40) coincide and define the pivoting axis (A) of the display unit (10).

10. Display module according to any of claims 3 to 9, **characterized in that** the concave shaped element (30) comprises, on the side opposite to the concave shaped surface, an extension (31) which is guided in an aperture (21) of the frame.

11. Display module according to any of the preceding claims, **characterized in that** the frame (20) is part of a dashboard of a vehicle.

12. Display module according to claim 8 and 10, **characterized in that** the at least one resilient device (50) is arranged along the extension (31) of the concave shaped element.

13. Display module according to any of the preceding claims, **characterized in that** the pivoting axis lies in front of the surface of the display panel (12) of the display unit (10).

## Patentansprüche

1. Anzeigemodul, umfassend
- einen Rahmen (20),
- eine Anzeigeeinheit (10), welche an dem Rahmen angebracht ist, und
- eine Lagerung zur schwenkbaren Anbringung der Anzeigeeinheit (10) an dem Rahmen (20), wobei die Lagerung eine erste Komponente (11), welche mit der Anzeigeeinheit vorgesehen ist, und eine zweite Komponente (30, 40), welche mit dem Rahmen (20) vorgesehen ist, umfasst,
wobei
eine von der ersten und zweiten Komponente (11) wenigstens einen Vorsprung umfasst, welcher als Ringsegment geformt oder entlang eines Ringsegments angeordnet ist, und die andere von der ersten und zweiten Komponente (30, 40) einen als Ringsegment geformten Kanal bildet, in welchem der Vorsprung läuft,
**dadurch gekennzeichnet, dass** das erste konkav geformte Element (30) in dem Rahmen auf eine mit Bezug auf die Schwenkachse (A) radial bewegliche Weise angeordnet ist und das erste konkav geformte Element (30) mittels einer elastischen Vorrichtung (50) in Richtung des zweiten konvex geformten Elements (40) gedrückt wird, wobei das zweite konvex geformte Element (40) an dem Rahmen befestigt ist.

2. Anzeigemodul nach Anspruch 1,
**dadurch gekennzeichnet, dass** die Schwenkachse (A) der Anzeigeeinheit nicht mehr als 20 mm, vorzugsweise nicht mehr als 10 mm, hinter oder vor dem Anzeigepanel (12) der Anzeigeeinheit (10) liegt.

3. Anzeigemodul nach Anspruch 1 oder 2, **dadurch gekennzeichnet, dass** die andere von der ersten und zweiten Komponente ein erstes konkav geformtes Element (30) und ein zweites konvex geformtes Element (40) umfasst, wobei der Kanal zwischen dem ersten konkav geformten Element (30) und dem zweiten konvex geformten Element (40) ausgebildet ist.

4. Anzeigemodul nach einem der vorhergehenden Ansprüche, **dadurch gekennzeichnet, dass** die eine von der ersten und der zweiten Komponente den wenigstens einen Vorsprung (11) umfasst, welcher als ein Ringsegment geformt oder entlang eines Ringsegments angeordnet ist, mit der Anzeigeeinheit (10) vorgesehen ist und die andere von der ersten und der zweiten Komponente (30, 40), welche den als ein Ringsegment geformten Kanal ausbildet, mit dem Rahmen (20) vorgesehen ist.

5. Anzeigemodul nach Anspruch 3 oder 4, **dadurch gekennzeichnet, dass** der Vorsprung (11) sandwichartig zwischen dem ersten konkav geformten Element (30) und dem zweiten konvex geformten Element (40) angeordnet ist.

6. Anzeigemodul nach einem der Ansprüche 4 oder 5, **dadurch gekennzeichnet, dass** der Vorsprung (11), welcher als Ringsegment geformt oder entlang eines Ringsegments angeordnet ist, auf jeder lateralen Seite der Anzeigeeinheit (10) angeordnet ist.

7. Anzeigemodul nach einem der Ansprüche 3-6, **dadurch gekennzeichnet, dass** das konvex geformte Element (40) zwei Anschläge (42, 43) umfasst, wobei jeder von ihnen eine Endposition der Schwenkbewegung der Anzeigeeinheit (10) definiert.

8. Anzeigemodul nach einem der vorhergehenden Ansprüche, **dadurch gekennzeichnet, dass** die elastische Vorrichtung (50) wenigstens eine Federscheibe umfasst.

9. Anzeigemodul nach einem der Ansprüche 3-8, **dadurch gekennzeichnet, dass** die Krümmungsmittelpunkte des Vorsprungs (11), des ersten konkav geformten Elements (30) und des zweiten konvex geformten Elements (40) zusammenfallen und die Schwenkachse (A) der Anzeigeeinheit (10) definieren.

10. Anzeigemodul nach einem der Ansprüche 3-9, **dadurch gekennzeichnet, dass** das konkav geformte Element (30) auf der Seite, welche der konkav geformten Oberfläche gegenüberliegt, eine Verlängerung (31) umfasst, welche in einer Öffnung (21) des Rahmens geführt ist.

11. Anzeigemodul nach einem der vorhergehenden Ansprüche, **dadurch gekennzeichnet, dass** der Rahmen (20) Teil eines Armaturenbretts eines Fahrzeugs ist.

12. Anzeigemodul nach Anspruch 8 und 10, **dadurch gekennzeichnet, dass** die wenigstens eine elastische Vorrichtung (50) entlang der Verlängerung (31) des konkav geformten Elements angeordnet ist.

13. Anzeigemodul nach einem der vorhergehenden Ansprüche, **dadurch gekennzeichnet, dass** die Schwenkachse vor der Oberfläche des Anzeigepanels (12) der Anzeigeeinheit (10) liegt.

## Revendications

1. Module d'affichage comprenant :
- un cadre (20),
- une unité d'affichage (10) attaché audit cadre, et
- un support pour monter l'unité d'affichage (10) de manière pivotante sur ledit cadre (20), le support comprenant un premier composant (11) pourvu de l'unité d'affichage et un second composant (30, 40) pourvu du cadre (20),
dans lequel un parmi le premier et le second composant (11) comprend au moins une protubérance de forme, ou arrangée le long d'un segment d'anneau, et l'autre dudit premier et second composant (30, 40) forme un canal en forme de segment d'anneau dans lequel la protubérance se déplace,
**caractérisé en ce que** le premier élément de forme concave (30) est disposé dans le cadre dans une direction mobile radialement par rapport à l'axe du pivot (A) et le premier élément de forme concave (30) est poussé vers le second élément de forme convexe (40) au moyen d'un dispositif élastique (50), le second élément convexe (40) étant fixé au cadre.

2. Module d'affichage selon la revendication 1, **caractérisé en ce que** l'axe pivotant (A) de l'unité d'affichage ne mesure pas plus de 20 mm, de préférence moins de 10 mm, derrière ou devant le panneau d'écran (12) du module d'affichage (10, 30).

3. Module d'affichage selon la revendication 1 ou 2, **caractérisé en ce que** l'autre du premier et du second composant comprend un premier élément de forme concave (30) et un second élément convexe (40), le canal étant formé entre le premier élément de forme concave (30) et le second élément de forme convexe (40).

4. Module d'affichage selon l'une quelconque des revendications précédentes, **caractérisé en ce que** l'un parmi le premier et le second composant comprend la au moins une protubérance (11) de forme de ou disposée le long d'un segment d'anneau est pourvue de l'unité d'affichage (10), et l'autre parmi le premier et le second composant (30, 40) formant le canal de forme en segment d'anneau est pourvu du cadre (20).

5. Module d'affichage selon la revendication 3 ou 4, **caractérisé en ce que** la protubérance (11) est intercalée entre le premier élément de forme concave (30) et le second élément de forme convexe (40).

6. Module d'affichage selon l'une quelconque des revendications 4 ou 5, **caractérisé en ce que** la protubérance (11) de forme en ou arrangée le long d'un segment d'anneau est disposée sur chaque côté latéral de l'unité d'affichage (10).

7. Module d'affichage selon l'une quelconque des revendications 3 à 6, **caractérisé en ce que** l'élément de forme convexe (40) comprend deux butées (42, 43), chacune d'elles définissant une position d'extrémité du mouvement de pivotement de l'unité d'affichage (10).

8. Module d'affichage selon l'une quelconque des revendications précédentes, **caractérisé en ce que** le dispositif élastique (50) comprend au moins un disque de ressort.

9. Module d'affichage selon l'une quelconque des revendications 3 à 8, **caractérisé en ce que** le centre des rayons de courbure de la protubérance (11), du premier élément de forme concave (30) et du second élément de forme convexe (40) coïncide avec et définit l'axe de pivotement (A) de l'unité d'affichage (10).

10. Module d'affichage selon l'une quelconque des revendications 3 à 9, **caractérisé en ce que** l'élément de forme concave (30) comprend, sur le côté opposé à la surface de forme concave, une extension (31) qui est guidée dans une ouverture (21) du cadre.

11. Module d'affichage selon l'une quelconque des revendications précédentes, **caractérisé en ce que** le cadre (20) est une partie d'un tableau de bord de véhicule.

12. Module d'affichage selon les revendications 8 et 10, **caractérisé en ce que** au moins un dispositif élastique (50) est disposé le long de l'extension (31) de l'élément de forme concave.

13. Module d'affichage selon l'une quelconque des revendications précédentes, **caractérisé en ce que** l'axe de pivotement s'étend devant la surface du panneau d'affichage (12) de l'unité d'affichage (10).
